# EUROPEAN PATENT APPLICATION

(11) **EP 4 707 459 A1**
(43) Date of publication of application: **11.03.2026**
(21) Application number: 24797326.6
(22) Date of filing: 12.04.2024
(51) Int. Cl.: D06M 15/37, D03D 15/267, D06M 13/292, D06M 11/79, D03D 15/37, D04H 1/435, D06M 17/00, D06C 7/00

(54) **MOLDED ARTICLE COMPRISING THERMOPLASTIC CONTINUOUS FIBER REINFORCED WOVEN COMPOSITE, AND METHOD FOR MANUFACTURING SAME**

(30) Priority: 25.04.2023 KR 20230053843
(71) Applicant: Lotte Chemical Corporation, Seoul 05551 (KR)
(72) Inventor: JEONG, Ho Gun, Uiwiang-si Gyeonggi-do 16073 (KR); KIM, Won Seock, Uiwiang-si Gyeonggi-do 16073 (KR)
(74) Representative: Germain Maureau
(86) International application number: PCT/KR2024/004902
(87) International publication number: WO 2024/225670

(57) **Abstract**

A molded article of the present invention comprises: a woven composite sheet formed from two or more stacked sheets of thermoplastic continuous fiber reinforced woven composites; and a nonwoven fabric heated and compressed to be stacked on at least one surface of the woven composite sheet, wherein the thermoplastic continuous fiber reinforced woven composites are woven using, as warp and weft, a glass fiber composite comprising approximately 100 parts by weight of glass fiber, approximately 35-72 parts by weight of a polypropylene resin, approximately 12-35 parts by weight of piperazine pyrophosphate, approximately 1-20 parts by weight of a phosphazene compound and approximately 1-20 parts by weight of zeolite. The glass fiber composite has excellent lightweightness, flame retardancy, impact resistance, stiffness, exterior characteristics and the like.

## Description

### [Technical Field]

The present invention relates to a molded article comprising a thermoplastic continuous fiber-reinforced woven composite (fabric) and a method for manufacturing the same. More particularly, the present invention relates to a molded article comprising a thermoplastic continuous fiber-reinforced woven fabric that exhibits good properties in terms of lightweightness, flame retardancy, impact resistance, stiffness, appearance characteristics, and the like, and a method for manufacturing the same.

### [Background Art]

In order to meet increasingly stringent requirements for weight reduction and environmental friendliness in the automotive industry, plastic materials are applied to automotive parts, instead of metals, and there is a strong trend towards weight reduction of automotive parts and adoption of thermoplastic resins, especially polypropylene (PP), in automotive parts, instead of using environmentally harmful materials, thermosetting resins, and the like. In particular, for development of technology for lightweight electric vehicle parts, there is a need to change materials used for lower protective plates of battery modules for electric vehicles.

However, when thermoplastic resins are applied to materials (such as continuous fiber-reinforced woven fabrics and the like) of molded articles (such as lower protective plates of battery modules for electric vehicles and the like) for the purpose of weight reduction and the like, there is a problem in that the molded articles undergo deterioration in flame retardancy, impact resistance, stiffness, and the like, compared to metals or thermosetting resins. Moreover, the materials of such molded articles have poor appearance characteristics, such as protrusion of reinforcing fibers after molding, when applied alone.

Therefore, there is a need to develop a molded article comprising a thermoplastic continuous fiber-reinforced woven fabric with good properties in terms of lightweightness, flame retardancy, impact resistance, stiffness, and appearance characteristics even when a thermoplastic resin is applied thereto.

The background technique of the present invention is disclosed in Korean Patent Laid-open Publication No. 10-2020-0033783 and the like.

### [Disclosure]

### [Technical Problem]

It is one object of the present invention to provide a molded article comprising a thermoplastic continuous fiber-reinforced woven fabric having good properties in terms of lightweightness, flame retardancy, impact resistance, stiffness, appearance characteristics, and the like.

It is another object of the present invention to provide a method for manufacturing the molded article.

The above and other objects of the present invention can be achieved by embodiments of the present invention described below.

### [Technical Solution]

1. One aspect of the present invention relates to a molded article. The molded article includes: a woven fabric sheet having at least two sheets of thermoplastic continuous fiber-reinforced woven fabrics stacked therein; and a non-woven fabric heated and pressed on at least one surface of the woven fabric sheet to be stacked thereon, wherein the thermoplastic continuous fiber-reinforced woven fabrics are produced by weaving warp and weft yarns of a glass fiber composite material comprising: about 100 parts by weight of glass fibers; about 35 parts by weight to about 72 parts by weight of a polypropylene resin; about 12 parts by weight to about 35 parts by weight of piperazine pyrophosphate; about 1 part by weight to about 20 parts by weight of a phosphazene compound; and about 1 part by weight to about 20 parts by weight of zeolite.
2. In embodiment 1, the polypropylene resin may comprise at least one of a homo polypropylene resin, a block polypropylene resin, and a random polypropylene resin.
3. In embodiment 2, the piperazine pyrophosphate and the phosphazene compound may be present in a weight ratio of about 1:0.1 to about 1:0.4.
4. In embodiment 2 or 3, the glass fiber composite material may be provided in the form of a tape in which the glass fibers are impregnated with the polypropylene resin, the piperazine pyrophosphate, the phosphazene compound, and the zeolite.
5. In embodiments 1 to 4, the glass fiber composite material may be provided in the form of a tape having a thickness of about 0.2 mm to about 1.5 mm and a width of about 5 mm to about 25 mm.
6. In embodiments 1 to 5, the thermoplastic continuous fiber-reinforced woven fabrics may have a void having a size of about 5 mm × about 5 mm or less between warp yarns and between weft yarns.
7. In embodiments 1 to 6, the non-woven fabric may be a polyethylene terephthalate non-woven fabric having a thickness of about 0.2 mm to about 1.5 mm.
8. In embodiments 1 to 7, the molded article may have a density of about 1.40 g/cm³ to about 1.55 g/cm³, as measured in accordance with ISO 1183-1.
9. In embodiments 1 to 8, the molded article may have a flame retardancy of V-1 or higher, as measured on a 2 mm thick specimen by the UL-94 vertical test method.
10. In embodiments 1 to 9, the molded article may have a peak force of about 3.5 kN to about 6.0 kN, a total displacement of about 20 mm to about 35 mm, and an energy absorption of about 30 J to about 50 J at a displacement of 15 mm, as measured on a 60 mm×60 mm×2 mm specimen under an impact energy of 198 J using a falling weight of 20 kg at a velocity of 4.4 m/s in accordance with ISO 6603-2.
11. In embodiments 1 to 10, the molded article may have a tensile strength of about 180 MPa to about 270 MPa, as measured on a 3 mm thick specimen in accordance with ISO 527, and a flexural strength of about 190 MPa to about 280 MPa, as measured on a 3 mm thick specimen in accordance with ISO 14125.
12. In embodiments 1 to 11, the molded article may self-extinguish without undergoing ignition in a long-term flame retardancy test conducted by directly heating a 330 mm×330 mm×2 mm specimen with a blue flame from a torch at a distance of 7 cm for 2 minutes and 10 seconds, followed by removal of the flame.
13. In embodiments 1 to 12, the molded article may include a lower protective plate of a battery module for electric vehicles.
14. Another aspect of the present invention relates to a method for manufacturing a molded article. The method includes: stacking at least two sheets of thermoplastic continuous fiber-reinforced woven fabrics, followed by heating and pressing to prepare a woven fabric sheet; and stacking a non-woven fabric on at least one surface of the woven fabric sheet, followed by heating and pressing, wherein the thermoplastic continuous fiber-reinforced woven fabrics are produced by weaving warp and weft yarns of a glass fiber composite material comprising: about 100 parts by weight of glass fibers; about 35 parts by weight to about 72 parts by weight of a polypropylene resin; about 12 parts by weight to about 35 parts by weight of piperazine pyrophosphate; about 1 part by weight to about 20 parts by weight of a phosphazene compound; and about 1 part by weight to about 20 parts by weight of zeolite.

### [Advantageous Effects]

The present invention provides a molded article comprising a thermoplastic continuous fiber-reinforced woven fabric having good properties in terms of lightweightness, flame retardancy, impact resistance, stiffness, appearance characteristics, and the like, and a method for manufacturing the same.

### [Description of Drawings]

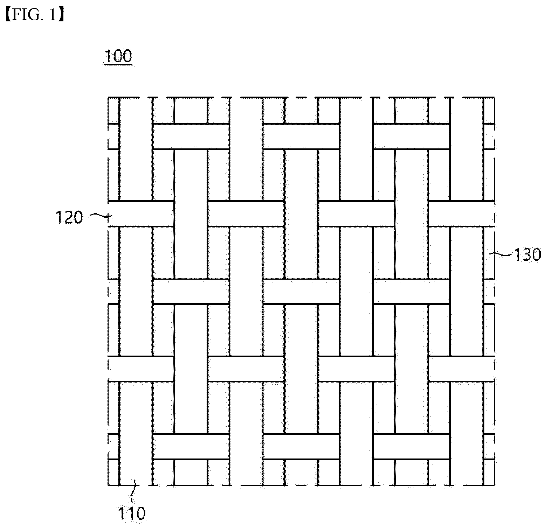

FIG. 1 is a plan view of a thermoplastic continuous fiber-reinforced woven fabric according to one embodiment of the invention.

### [Best Mode]

Hereinafter, embodiments of the present invention will be described in detail with reference to the accompanying drawings. However, it should be understood that the following specific embodiments are provided to ensure thorough understanding of the present invention by a person having ordinary knowledge in the art and can be modified into various other forms, and that the scope of the present invention is not limited to the embodiments described below.

In the drawings, the size of components, such as width or thickness, may be exaggerated for clarity. In addition, although only a portion of a certain component is shown in the drawings for convenience of explanation, those skilled in the art will be able to easily understand the remaining portions of the component. In addition, it will be apparent to a person having ordinary knowledge in the art that the technical features of the present invention can be realized in various other forms without departing from the spirit of the invention. Herein, description of the drawings is based on the observer's viewpoint, and the terms "upper," "lower," "left," "right," "front," and "rear" are defined with respect to the orientation of the drawings. In addition, it will be apparent to a person having ordinary knowledge in the art that the technical features of the present invention can be realized in various other forms without departing from the spirit of the invention. Like components will be denoted by like reference numerals throughout the specification.

As used herein, the singular forms, "a," "an," and "the" are intended to include the plural forms as well, unless the context clearly indicates otherwise. Moreover, the terms "comprise," "include," and/or "have" "when used in this specification, specify the presence of stated features, integers, steps, operations, elements, components, and/or combinations thereof, but do not preclude the presence or addition of one or more other features, integers, steps, operations, elements, components, and/or combinations thereof.

A molded article according to the present invention includes (A) a woven fabric sheet; and (B) a non-woven fabric.

As used herein to represent a specific numerical range, "a to b" is defined as "≥a and ≤b".

### (A) Woven fabric sheet

The woven fabric sheet according to one embodiment of the invention can impart improved lightweightness, flame retardancy, impact resistance, stiffness, and the like to a molded article even when a thermoplastic resin is applied thereto, and is prepared in the form of at least two sheets of thermoplastic continuous fiber-reinforced woven fabrics stacked one above another.

FIG. 1 is a plan view of a thermoplastic continuous fiber-reinforced woven fabric according to one embodiment of the invention. As shown in FIG. 1, a thermoplastic continuous fiber-reinforced woven fabric 100 according to one embodiment of the invention is produced by weaving a warp yarn 110 and a weft yarn 120 of a glass fiber composite material prepared in tape form. Such a woven fabric can be produced by any method known in the art.

In some embodiments, the thermoplastic continuous fiber-reinforced woven fabric may have a void 130 having a size of about 5 mm×5 mm or less between adjacent warp yarns 110 and between adjacent weft yarns 120. Within this range, the void can be minimized in manufacture of the molded article and the thermoplastic continuous fiber-reinforced woven fabric can have good properties in terms of formability, flame retardancy, impact resistance, stiffness, and the like.

In some embodiments, the glass fiber composite material is a tape-shaped glass fiber composite material having good properties in terms of lightweightness, flame retardancy, impact resistance, stiffness, and the like, even when a thermoplastic resin is applied thereto, and can improve lightweightness, flame retardancy, impact resistance, stiffness, and the like of the thermoplastic continuous fiber-reinforced woven fabric produced by weaving weft and warp yarns, a woven fabric sheet formed by stacking at least two sheets of the woven fabrics, and a molded article comprising the woven composite. The glass fiber composite material comprises: (a) glass fibers; (b) a polypropylene resin; (c) piperazine pyrophosphate; (d) a phosphazene compound; and (e) zeolite.

### (a) Glass fibers

The glass fibers according to one embodiment of the invention may form a tape-shaped glass fiber composite material having good properties in terms of lightweightness, flame retardancy, impact resistance, stiffness, and the like, when impregnated with the polypropylene resin, the piperazine pyrophosphate, the phosphazene compound, and zeolite.

In some embodiments, the glass fibers may be provided in fiber form and may have various cross-sectional shapes, such as a circular shape, an oval shape, a rectangular shape, and the like. For example, glass fibers having a circular and/or rectangular cross-section may be advantageous in terms of mechanical properties.

In some embodiments, as measured by a scanning electron microscope (manufacturer: JEOL, Product name: JSM-6390A), the glass fibers having a circular cross-section may have a diameter of about 5 µm to about 20 µm, for example, about 7 µm to about 15 µm, and the glass fibers having a rectangular cross-section may have an aspect ratio (long-side length/short-side length in cross-section) of about 1.5 to about 10, for example, about 2 to about 8, and a short-side length of about 2 µm to about 10 µm, for example, about 4 µm to about 8 µm. The glass fibers may have a pre-processing length of about 1 mm to about 30 mm, for example, about 2 mm to about 16 mm. Within these ranges, the glass fiber composite material can have good productivity, impregnability, and the like.

In some embodiments, the glass fibers may be treated with a typical surface treatment agent. The surface treatment agent may include a silane compound, a urethane compound, an epoxy compound, and the like, without being limited thereto.

### (b) Polypropylene resin

The polypropylene resin according to one embodiment of the invention may form a tape-shaped glass fiber composite material having good properties in terms of lightweightness, flame retardancy, impact resistance, stiffness, and the like, when impregnated into the glass fibers together with the piperazine pyrophosphate, the phosphazene compound, and zeolite, and may include a polypropylene resin used in typical thermoplastic resin compositions.

In some embodiments, the polypropylene resin may comprise at least one of a homo polypropylene resin, a block polypropylene resin, and a random polypropylene resin. Here, the block polypropylene resin may include a block polypropylene resin comprising a homo polypropylene block and an ethylenepropylene copolymer block and/or a homo polyethylene block, and the random polypropylene resin may include a propylene-ethylene random copolymer.

In some embodiments, the polypropylene resin may have a melt-flow index (MI) of about 1 g/10 min to about 1,600 g/10 min, for example, about 5 g/10 min to about 1,400 g/10 min, as measured at 230°C under a load of 2.16 kg in accordance with ASTM D1238. Within this range, the glass fiber composite material can exhibit good mechanical properties, molding processability, and the like.

In some embodiments, the polypropylene resin may be present in an amount of about 35 to about 72 parts by weight, for example, about 36 to about 70 parts by weight, relative to about 100 parts by weight of the glass fibers. If the content of the polypropylene resin is less than about 35 parts by weight relative to about 100 parts by weight of the glass fibers, the glass fiber composite material cannot be prepared due to breakage of the glass fibers or can suffer from poor lightweightness, poor impregnation, poor formability, and the like, and if the content of the polypropylene resin exceeds about 72 parts by weight, the glass fiber composite material can suffer from deterioration in flame retardancy, impact resistance, stiffness, and the like.

### (c) Piperazine pyrophosphate

The piperazine pyrophosphate according to one embodiment of the invention may form a tape-shaped glass fiber composite material having good properties in terms of lightweightness, flame retardancy, impact resistance, stiffness, and the like, when impregnated into the glass fibers together with the polypropylene resin, the phosphazene compound, and zeolite, and may include piperazine pyrophosphate used as a phosphorus-nitrogen based flame retardant.

In some embodiments, the piperazine pyrophosphate may be present in an amount of about 12 to about 35 parts by weight, for example, about 15 to about 33 parts by weight, relative to about 100 parts by weight of the glass fibers. If the content of the piperazine pyrophosphate is less than about 12 parts by weight relative to about 100 parts by weight of the glass fibers, the glass fiber composite material can suffer from poor flame retardancy and the like, and if the content of the piperazine pyrophosphate exceeds about 35 parts by weight, the glass fiber composite material can suffer from deterioration in impact resistance, stiffness, formability, and the like.

In some embodiments, a weight ratio (polypropylene resin:piperazine pyrophosphate) of the polypropylene resin to the piperazine pyrophosphate may range from about 1:0.2 to about 1:1, for example, about 1:0.25 to about 1:0.90. Within this range, the glass fiber composite material can have better properties in terms of flame retardancy, impact resistance, stiffness, impregnability, and the like.

### (d) Phosphazene compound

The phosphazene compound according to one embodiment of the invention may form a tape-shaped glass fiber composite material having good properties in terms of lightweightness, flame retardancy, impact resistance, stiffness, and the like, when impregnated into the glass fibers together with the polypropylene resin, the piperazine pyrophosphate, and zeolite to, and may include a phosphazene compound used in typical flame retardant thermoplastic resin compositions.

In some embodiments, the phosphazene compound may comprise a phosphazene compound represented by Formula 1.

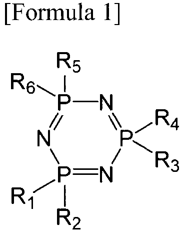

In Formula, R₁, R₂, R₃, R₄, R₅ and R₆ are each independently a hydrogen atom, a halogen atom, a substituted or unsubstituted C₁ to C₂₀ alkyl group, a substituted or unsubstituted C₂ to C₇ alkenyl group, a substituted or unsubstituted C₃ to C₂₀ cycloalkyl group, a substituted or unsubstituted C₂ to C₂₀ heterocycloalkyl group, a C₁ to C₂₀ alkoxy group, a C₆ to C₂₀ aryl or aryloxy group, a C₅ to C₂₀ heteroaryl group, a substituted or unsubstituted C₃ to C₂₀ alkoxycarbonylalkyl group, a substituted or unsubstituted a C₂ to C₂₀ carbonylalkyl group, an amino group, or a hydroxyl group.

Herein, "substituted" means that a hydrogen atom is substituted with a substituent, such as a C₁ to C₂₀ alkyl group, a halogen atom, a nitro group, a cyano group, a hydroxyl group, an amino group, a C₆ to C₁₀ aryl group, a C₃ to C₁₀ cycloalkyl group, a C₃ to C₁₀ heterocycloalkyl group, a C₄ to C₁₀ heteroaryl group, or a combination thereof.

In addition, "alkyl," "alkoxy," and other "alkyl" moiety-containing substituents include both linear and branched forms, "alkenyl" includes both linear and branched forms having 2 to 8 carbon atoms and containing at least one double bond, and "cycloalkyl" includes both saturated monocyclic and saturated bicyclic ring structures having 3 to 20 carbon atoms. In addition, "aryl" refers to a cyclic organic radical derived from an aromatic hydrocarbon by removal of one hydrogen atom and includes single or fused ring systems in which each ring suitably contains 4 to 7, preferably 5 or 6, skeletal atoms. Specific examples of "aryl" may include phenyl, naphthyl, biphenyl, tolyl, and the like.

In addition, "heterocycloalkyl" refers to a cycloalkyl group containing 1 to 3 heteroatoms selected from among N, O, and S as a skeletal atom of a saturated cyclic hydrocarbon structure and containing carbon as remaining skeletal atoms of a saturated monocyclic or bicyclic ring structure, and may include, for example, pyrrolidinyl, azetidinyl, pyrazolidinyl, oxazolidinyl, piperidinyl, piperazinyl, morpholinyl, thiomorpholinyl, thiazolidinyl, hydantoinyl, valerolactamyl, oxiranyl, oxetanyl, dioxolanyl, dioxanyl, oxathiolanyl, oxathianyl, dithianyl, dihydrofuranyl, tetrahydrofuranyl, dihydropyranyl, tetrahydropyranyl, tetrahydropyridinyl, tetrahydropyrimidinyl, tetrahydrothiophenyl, tetrahydrothiopyranyl, diazepanyl, azepanyl, and the like.

In addition, "heteroaryl" refers to an aryl group containing 1 to 3 heteroatoms selected from among N, O, and S as a skeletal atom of an aromatic ring structure and containing carbon as remaining skeletal atoms of the aromatic ring structure. The heteroaryl group includes divalent aryl groups in which a heteroatom in the ring structure is oxidized or quaternized to form, for example, an N-oxide or a quaternary salt. Specific examples of "heteroaryl" may include furyl, thienyl, pyrrolyl, pyranyl, imidazolyl, pyrazolyl, thiazolyl, thiadiazolyl, isothiazolyl, isoxazolyl, oxazolyl, oxadiazolyl, triazinyl, tetrazinyl, triazolyl, tetrazolyl, furazanyl, pyridyl, pyrazinyl, pyrimidinyl, pyridazinyl, and the like.

In some embodiments, the phosphazene compound may be present in an amount of about 1 to about 20 parts by weight, for example, about 2 to about 15 parts by weight, relative to about 100 parts by weight of the glass fibers. If the content of the phosphazene compound is less than about 1 parts by weight relative to about 100 parts by weight of the glass fibers, the glass fiber composite material can suffer from poor flame retardancy and the like, and if the content of the phosphazene compound exceeds about 20 parts by weight, the glass fiber composite material can suffer from deterioration in productivity, impact resistance, stiffness, and the like.

In some embodiments, a weight ratio (piperazine pyrophosphate:phosphazene compound) of the piperazine pyrophosphate to the phosphazene compound may range from about 1:0.1 to about 1:0.4, for example, about 1:0.13 to about 1:0.35. Within this range, the glass fiber composite material can exhibit better properties in terms of flame retardancy, productivity, impregnability, and the like.

### (e) Zeolite

The zeolite according to one embodiment of the invention may form a tape-shaped glass fiber composite material having good properties in terms of lightweightness, flame retardancy, impact resistance, stiffness, and the like, when impregnated into the glass fibers together with the polypropylene resin, the piperazine pyrophosphate, and the phosphazene compound, and may include zeolite used in typical thermoplastic resin compositions.

In some embodiments, the zeolite may comprise porous particles having a pore size of about 2 nm to about 8 nm, for example, about 3 nm to about 6 nm, and an average particle size of about 1 µm to about 7 µm, for example, about 3 µm to about 5 µm. Within these ranges, the glass fiber composite material can have good properties in terms of productivity, impregnability, and the like. Here, the average particle size of the zeolite is defined as a particle size at a cumulative value of 50% obtained from a particle size distribution measured by a laser diffraction/scattering method.

In some embodiments, the zeolite may be present in an amount of about 1 to about 20 parts by weight, for example, about 2 to about 15 parts by weight, relative to about 100 parts by weight of the glass fibers. If the content of the zeolite is less than about 1 part by weight relative to about 100 parts by weight of the glass fibers, the glass fiber composite material can suffer from deterioration in impact resistance, stiffness, and the like, and if the content of the zeolite exceeds about 20 parts by weight, the glass fiber composite material can suffer from deterioration in productivity, impregnability, and the like.

In some embodiments, a weight ratio (polypropylene resin:zeolite) of the polypropylene resin to the zeolite may range from about 1:0.05 to about 1:0.40, for example, about 1:0.06 to about 1:0.30. Within this range, the glass fiber composite material can exhibit better properties in terms of impregnability, impact resistance, stiffness, and the like.

The glass fiber composite material according to one embodiment of the invention may be provided in the form of a tape in which the glass fibers are impregnated with the polypropylene resin, the piperazine pyrophosphate, the phosphazene compound, and zeolite, and may have a thickness of about 0.2 mm to about 1.5 mm, for example, about 0.3 mm to about 1.1 mm, and a width of about 5 mm to about 25 mm, for example, about 7 mm to about 20 mm. Within these ranges, the glass fiber composite material can have good properties in terms of flame retardancy, impact resistance, stiffness, and the like.

In some embodiments, the glass fiber composite material may be prepared by any suitable method known in the art. For example, the glass fiber composite material may be prepared using an apparatus disclosed in Korean Patent Laid-open Publication No. 10-2018-0035064.

### (B) Non-woven fabric

The non-woven fabric according to one embodiment of the invention may be applied together with the woven fabric sheet to improve appearance characteristics of the molded article.

In some embodiments, the non-woven fabric may have a thickness of about 0.2 mm to about 1.5 mm, for example, about 0.5 to about 1.0 mm. Within this range, the non-woven fabric does not cause delamination in a final product due to interfacial bonding with the woven fabric sheet and can have good appearance characteristics and the like.

In some embodiments, the non-woven fabric may be a polyethylene terephthalate non-woven fabric. When used as the non-woven fabric, the polyethylene terephthalate non-woven fabric has a higher melting point than the polypropylene resin, which is a base resin of the woven fabric sheet, whereby the non-woven fabric can maintain an original shape even upon molding, and the polypropylene resin of the woven fabric sheet melted during heating and pressing upon manufacture of a molded article can permeate the non-woven fabric to improve bonding performance between the non-woven fabric and the woven fabric sheet. In addition, the flame retardant system (such as the piperazine pyrophosphate and the phosphazene compound) of the woven fabric sheet can also permeate the non-woven fabric together with the polypropylene resin, whereby the non-woven fabric and the woven fabric sheet can have shared flame retardancy. That is, flame retardancy of the molded article can be maintained even when a typical non-flame retardant non-woven fabric is applied thereto instead of a flame retardant woven fabric.

In some embodiments, the non-woven fabric may be a typical flame-retardant non-woven fabric, for example, a polyethylene terephthalate non-woven fabric having flame-retardant properties. As a result, the molded article can have better flame retardancy.

A molded article according to one embodiment of the invention may be manufactured by stacking at least two sheets of the thermoplastic continuous fiber-reinforced woven fabrics, followed by heating and pressing to manufacture the woven fabric sheet; and stacking the non-woven fabric on at least one surface of the woven fabric sheet, followed by heating and pressing. Such a molding method is well known to a person having ordinary knowledge in the art.

In some embodiments, heating and pressing in preparation of the woven fabric sheet may be performed by pressing with a pressing roller at a temperature of about 180°C to about 260°C, for example, pressing with a pressing roller at about 230°C to about 260°C. Within this temperature range, the woven fabric sheet can exhibit good peel resistance, mechanical properties, and the like.

In some embodiments, heating and pressing after stacking the non-woven fabric may be performed using a press machine at about 230°C to about 260°C. Within this temperature range, the woven fabric sheet and the non-woven fabric can exhibit good bonding performance and the like, the woven fabric sheet and the non-woven fabric can have shared flame retardancy, and the like, and the molded article can exhibit good appearance characteristics and the like. The press machine may include a press machine of about 2,000 tons to about 3,000 tons, without being limited thereto.

In some embodiments, the molded article may have a density of about 1.40 g/cm³ to about 1.55 g/cm³, for example, about 1.41 g/cm³ to about 1.54 g/cm³, as measured in accordance with ISO 1183-1.

In some embodiments, the molded article may have a flame retardancy of V-1 or higher, as measured on a 2 mm thick specimen by the UL-94 vertical flammability test method.

In some embodiments, the molded article may have a peak force of about 3.5 kN to about 6.0 kN, for example, about 3.6 kN to about 5.0 kN, a total displacement of about 20 mm to about 35 mm, for example, about 22 mm to about 35 mm, and an energy absorption of about 30 J to about 50 J, for example, about 30 J to about 45 J, at a displacement of 15 mm, as measured on a 60 mm×60 mm×2 mm specimen under an impact energy of 198 J using a falling weight of 20 kg at a velocity of 4.4 m/s in accordance with ISO 6603-2.

In some embodiments, the molded article may have a tensile strength of about 180 MPa to about 270 MPa, for example, about 181 MPa to about 260 MPa, as measured on a 3 mm thick specimen in accordance with ISO 527.

In some embodiments, the molded article may have a flexural strength of about 190 MPa to about 280 MPa, for example, 191 MPa to 270 MPa, as measured on a 3 mm thick specimen in accordance with ISO 14125.

In some embodiments, the molded article may self-extinguish without undergoing ignition in a long-term flame retardancy test conducted by directly heating a 330 mm×330 mm×2 mm specimen with a blue flame from a torch at a distance of 7 cm for 2 minutes and 10 seconds, followed by removal of the flame.

In some embodiments, the molded article has good properties in terms of lightweightness, flame retardancy, impact resistance, stiffness, appearance characteristics, and property balance therebetween, and is thus useful as interior/exterior materials for electronic devices, interior/exterior materials for automobiles, structural materials for automobiles, and the like, especially as a lower protective plate of a battery module for electric vehicles.

### [Mode for Invention]

Next, the present invention will be described in more detail with reference to some examples. It should be understood that these examples are provided for illustration only and are not to be construed in any way as limiting the invention.

### EXAMPLE

Details of components used in Examples and Comparative Examples are as follows.

### (A) Glass fiber

Glass fibers with a circular cross-section (manufacturer: Owens Corning, product name: SE4121 HP) were used.

### (B) Polypropylene resin

A homo polypropylene resin (manufacturer: LG Chem., product name: H7914A) was used.

### (C) Phosphorus-nitrogen compound

(C1) Piperazine pyrophosphate (manufacturer: Chempia Co., Ltd., product name: FR220N) was used.
(C2) Melamine pyrophosphate (manufacturer: Chempia Co., Ltd., product name: MPP-D) was used.

### (D) Phosphorus compound

(D1) A phosphazene compound (manufacturer: Chempia Co., Ltd., product name: FRPPZ) was used.
(D2) Bisphenol-A diphosphate (manufacturer: Jiangsu Yoke Technology Co., Ltd., product name: Yoke BDP) was used.

### (E) Zeolite

Zeolite (manufacturer: Huyn Chemical Co., Ltd., product name: APS 30) was used.

### Examples 1 to 3 and Comparative Examples 1 to 6

Based on amounts listed in Tables 1 and 2, glass fibers were impregnated with a polypropylene resin, a phosphorus-nitrogen compound (piperazine pyrophosphate or melamine pyrophosphate), a phosphorus compound (phosphazene compound or bisphenol-A diphosphate), and zeolite, followed by preparing a tape-shaped glass fiber composite material (continuous fiber thermoplastic (CFT)) having a thickness of about 0.4 mm and a width of about 11 mm by a method well-known in the art, and then a thermoplastic continuous fiber-reinforced woven fabric was prepared by weaving the glass fiber composite material as weft and warp yarns to form a void having a size of 2 mm×2 mm or less between adjacent weft yarns and between adjacent warp yarns of the glass fiber composite material.

Next, several sheets of the thermoplastic continuous fiber-reinforced woven fabrics were stacked to a predetermined thickness, followed by stacking a polyethylene terephthalate non-woven fabric (manufacturer: Hoan Co., Ltd., Product name: Chemical non-woven fabric) on one surface of the resulting woven fabric sheet (exposed surface after molding) depending upon application of the non-woven fabric shown in Tables 1 and 2. Then, the resulting product was manufactured into a flat sheet specimen using a hot press and a cooling press, followed by cutting the flat sheet specimen to predetermined dimensions using a numerical control machine (NC machine), thereby preparing a specimen for property evaluation. The prepared specimen was evaluated as to the following properties and results are shown in Tables 1 and 2.

### Property Evaluation

(1) Lightweightness: Density (unit: g/cm³) was measured in accordance with ISO 1183-1.
(2) Flame retardancy: Flame retardancy (unit: grade) was measured on a 2 mm thick specimen by the UL-94 vertical flammability test method.
(3) Impact resistance: Surface impact strength was measured on a 60 mm×60 mm×2 mm specimen by measuring the peak force (unit: kN), total displacement (unit: mm), and energy absorption (unit: J) at a displacement of 15 mm, under an impact energy of 198 J using a falling weight of 20 kg at a velocity of 4.4 m/s in accordance with ISO 6603-2.
(4) Stiffness: Tensile strength (unit: MPa) was measured on a 3 mm thick specimen in accordance with ISO 527.
(5) Stiffness: Flexural strength (unit: MPa) was measured on a 3 mm thick specimen in accordance with ISO 14125.
(6) Long-term flame retardancy: A long-term flame retardancy test was conducted by directly heating a 330 mm×330 mm×2 mm specimen with a blue flame from a torch at a distance of 7 cm for 2 minutes and 10 seconds, followed by removal of the flame. When the specimen self-extinguished without undergoing ignition after removal of the flame, a corresponding woven fabric was evaluated as "Pass" and, when the specimen ignited after removal of the flame, a corresponding woven fabric was evaluated as "Fail."
(7) Appearance characteristics: An appearance of a molded article was visually evaluated to check for protrusion of glass fibers, non-woven fabric tears, exposure of woven fabric sheets during stacking, and cracks/damage.

**Table 1**

| | Example | | |
|---|---|---|---|
| | 1 | 2 | 3 |
| (A) (parts by weight) | 100 | 100 | 100 |
| (B) (parts by weight) | 45.5 | 54.5 | 50 |
| (C1) (parts by weight) | 25.5 | 18.2 | 30 |
| (C2) (parts by weight) | - | - | - |
| (D1) (parts by weight) | 3.6 | 5.5 | 10 |
| (D2) (parts by weight) | - | - | - |
| (E) (parts by weight) | 7.3 | 3.6 | 10 |
| Application of non-woven fabric | Applied | Applied | Applied |
| Density (g/cm³) | 1.51 | 1.47 | 1.45 |
| Flame retardancy (grade) | V-0 | V-1 | V-1 |
| Peak force (kN) | 4.4 | 4.2 | 3.7 |
| Total displacement (mm) | 26 | 28 | 32 |
| Energy absorption *@* 15 mm (J) | 42 | 39 | 32 |
| Tensile strength (MPa) | 245 | 245 | 185 |
| Flexural strength (MPa) | 274 | 220 | 215 |
| Long-term flame retardancy | Pass | Pass | Pass |
| Appearance characteristics | Pass | Pass | Pass |

**Table 2**

| | Comparative Example | | | | | |
|---|---|---|---|---|---|---|
| | 1 | 2 | 3 | 4 | 5 | 6 |
| (A) (parts by weight) | 100 | 100 | 100 | 100 | 100 | 100 |
| (B) (parts by weight) | 31.7 | 73.3 | 66.7 | 45.5 | 54.5 | 41.8 |
| (C1) (parts by weight) | 25 | 31.1 | 37.8 | - | - | 30.9 |
| (C2) (parts by weight) | - | - | - | 7.3 | 5.5 | - |
| (D1) (parts by weight) | 5 | 8.9 | 8.9 | - | - | 9.1 |
| (D2) (parts by weight) | - | - | - | 21.8 | 18.2 | - |
| (E) (parts by weight) | 5 | 8.9 | 8.9 | 7.3 | 3.6 | - |
| Application of non-woven fabric | Not applied | Not applied | Not applied | Not applied | Not applied | Not applied |
| Density (g/cm³) | Impossib le to manufact ure | 1.41 | 1.43 | Impossib le to manufact ure | Impossib le to manufact ure | 1.52 |
| Flame retardancy (grade) | | Fail | V-1 | | | V-1 |
| Peak force (kN) | | 3.3 | 2.8 | | | 3.3 |
| Total displacement (mm) | | 38 | 37 | | | 36 |
| Energy absorption *@* 15 mm (J) | | 27 | 28 | | | 29 |
| Tensile strength (MPa) | | 165 | 170 | | | 171 |
| Flexural strength (MPa) | | 173 | 171 | | | 166 |
| Long-term flame retardancy | | Fail | Pass | | | Pass |
| Appearance characteristics | | Fail | Fail | | | Fail |

From the above results, it could be seen that the glass fiber composite materials, the thermoplastic continuous fiber-reinforced woven fabrics, and the molded articles according to the present invention had good properties in terms of lightweightness (density), flame retardancy, impact resistance (peak force, total displacement, energy absorption at a displacement of 15 mm), stiffness (tensile strength, flexural strength), appearance characteristics, property balance therebetween, and the like.

On the other hand, it could be seen that, in Comparative Example 1, where an insufficient amount of the polypropylene resin was applied, it was impossible to manufacture a tape-shaped glass fiber composite material due to glass fiber breakage caused by increased friction between the nozzle and the glass fibers; the molded article of Comparative Example 2 using an excess of the polypropylene resin suffered from deterioration in flame retardancy, impact resistance, stiffness, and the like; and the molded article of Comparative Example 3 using an excess of piperazine pyrophosphate suffered from deterioration in impact resistance, stiffness, and the like. It could be seen that, in Comparative Examples 4 and 5, where melamine pyrophosphate (C2) and bisphenol-A diphosphate (D2) were used instead of the piperazine pyrophosphate and the phosphazene compound according to the present invention, respectively, it was impossible to manufacture tape-shaped glass fiber composite materials due to increase in viscosity and decrease in wettability. It could be seen that the molded article of Comparative Example 6 prepared without zeolite suffered from deterioration in impact resistance, stiffness, and the like. In addition, it could be seen that, in the molded articles of Comparative Examples 2, 3, and 6 prepared without the non-woven fabric, the woven fabric sheet was exposed, causing deterioration in appearance characteristics, such as protrusion of the glass fibers on the surface of a molded article specimen for property evaluation.

Although some embodiments have been described herein, it will be understood by those skilled in the art that various modifications, changes, and alterations can be made without departing from the spirit and scope of the invention. Therefore, it should be understood that these embodiments are provided for illustration only and are not to be construed in any way as limiting the present invention. The scope of the present invention should be defined by the appended claims rather than by the foregoing description, and the claims and equivalents thereto are intended to cover such modifications and the like as would fall within the scope of the present invention.

## Claims

1. A molded article comprising:
a woven fabric sheet having at least two sheets of thermoplastic continuous fiber-reinforced woven fabrics stacked therein; and
a non-woven fabric heated and pressed on at least one surface of the woven fabric sheet to be stacked thereon,
wherein the thermoplastic continuous fiber-reinforced woven fabrics are produced by weaving warp and weft yarns of a glass fiber composite material comprising: about 100 parts by weight of glass fibers; about 35 parts by weight to about 72 parts by weight of a polypropylene resin; about 12 parts by weight to about 35 parts by weight of piperazine pyrophosphate; about 1 part by weight to about 20 parts by weight of a phosphazene compound; and about 1 part by weight to about 20 parts by weight of zeolite.

2. The molded article according to claim 1, wherein the polypropylene resin comprises at least one of a homo polypropylene resin, a block polypropylene resin, and a random polypropylene resin.

3. The molded article according to claim 1 or 2, wherein the piperazine pyrophosphate and the phosphazene compound are present in a weight ratio of about 1:0.1 to about 1:0.4.

4. The molded article according to any one of claims 1 to 3, wherein the glass fiber composite material is provided in the form of a tape in which the glass fibers are impregnated with the polypropylene resin, the piperazine pyrophosphate, the phosphazene compound, and the zeolite.

5. The molded article according to any one of claims 1 to 4, wherein the glass fiber composite material is provided in the form of a tape having a thickness of about 0.2 mm to about 1.5 mm and a width of about 5 to about 25 mm.

6. The molded article according to any one of claims 1 to 5, wherein the thermoplastic continuous fiber-reinforced woven fabrics have a void having a size of about 5 mm × about 5 mm or less between warp yarns and between weft yarns.

7. The molded article according to any one of claims 1 to 6, wherein the non-woven fabric is a polyethylene terephthalate non-woven fabric having a thickness of about 0.2 mm to about 1.5 mm.

8. The molded article according to any one of claims 1 to 7, wherein the molded article has a density of about 1.40 g/cm³ to about 1.55 g/cm³, as measured in accordance with ISO 1183-1.

9. The molded article according to any one of claims 1 to 8, wherein the molded article has a flame retardancy of V-1 or higher, as measured on a 2 mm thick specimen by the UL-94 vertical test method.

10. The molded article according to any one of claims 1 to 9, wherein the molded article has a peak force of about 3.5 kN to about 6.0 kN, a total displacement of about 20 mm to about 35 mm, and an energy absorption of about 30 J to about 50 J at a displacement of 15 mm, as measured on a 60 mm×60 mm×2 mm specimen under an impact energy of 198 J using a falling weight of 20 kg at a velocity of 4.4 m/s in accordance with ISO 6603-2.

11. The molded article according to any one of claims 1 to 10, wherein the molded article has a tensile strength of about 180 MPa to about 270 MPa, as measured on a 3 mm thick specimen in accordance with ISO 527, and a flexural strength of about 190 MPa to about 280 MPa, as measured on a 3 mm thick specimen in accordance with ISO 14125.

12. The molded article according to any one of claims 1 to 11, wherein the molded article self-extinguishes without undergoing ignition in a long-term flame retardancy test conducted by directly heating a 330 mm×330 mm×2 mm specimen with a blue flame from a torch at a distance of 7 cm for 2 minutes and 10 seconds, followed by removal of the flame.

13. The molded article according to any one of claims 1 to 12, wherein the molded article comprises a lower protective plate of a battery module for electric vehicles.

14. A method for manufacturing a molded article, comprising
stacking at least two sheets of thermoplastic continuous fiber-reinforced woven fabrics, followed by heating and pressing to prepare a woven fabric sheet; and
stacking a non-woven fabric on at least one surface of the woven fabric sheet, followed by heating and pressing,
wherein the thermoplastic continuous fiber-reinforced woven fabrics are produced by weaving warp and weft yarns of a glass fiber composite material comprising: about 100 parts by weight of glass fibers; about 35 parts by weight to about 72 parts by weight of a polypropylene resin; about 12 parts by weight to about 35 parts by weight of piperazine pyrophosphate; about 1 part by weight to about 20 parts by weight of a phosphazene compound; and about 1 part by weight to about 20 parts by weight of zeolite.
